# EUROPEAN PATENT APPLICATION

(11) **EP 4 567 910 A1**
(43) Date of publication of application: **11.06.2025**
(21) Application number: 24210284.6
(22) Date of filing: 31.10.2024
(51) Int. Cl.: H01M 4/04, B29C 43/32, B29C 43/46

(54) **APPARATUS FOR MANUFACTURING DRY ELECTRODE**

(30) Priority: 05.12.2023 KR 20230174814
(71) Applicant: Samsung SDI Co., Ltd., Gyeonggi-do 17084 (KR)
(72) Inventor: LEE, Donggeun, 17084 Yongin-si (KR); LEE, Jinhyon, 17084 Yongin-si (KR); KWON, Seunguk, 17084 Yongin-si (KR); PYUN, Ahram, 17084 Yongin-si (KR); CHOI, Jongsup, 17084 Yongin-si (KR)
(74) Representative: Marks & Clerk LLP

(57) **Abstract**

An apparatus for manufacturing a dry electrode may include a feeder configured to supply fine powder, a plurality of main rollers sequentially disposed in a first direction and configured to calender the fine powder supplied from the feeder into a free-standing film, and a plurality of shear rollers adjacent to the plurality of main rollers in a second direction crossing the first direction. The plurality of main rollers and the plurality of shear roller are configured such that the free-standing film is interposed between the main rollers and the shear rollers.

## Description

### BACKGROUND

### (a) Field

The present disclosure relates to an apparatus for manufacturing a dry electrode.

### (b) Description of the Related Art

In general, a rechargeable battery is a battery that can be repeatedly charged and discharged.

Recently, there is an increasing need for an apparatus for manufacturing a dry electrode for rechargeable batteries without using solvents.

A conventional apparatus for manufacturing a dry electrode may manufacture the dry electrode by calendering fine powder including an active material, a conductive material, and a binder into a free-standing film by using a calendering roll or the like, and laminating the free-standing film to a current collector. Thus, a conventional apparatus for manufacturing a dry electrode includes a plurality of rollers for calendering the fine powder into the free-standing film.

However, the plurality of rollers in a conventional apparatus for manufacturing a dry electrode also include a plurality of stretching rollers arranged to stretch the free-standing film in addition to the plurality of forming rollers for forming the fine powder into the free-standing film. The plurality of stretching rollers causes an increase of an overall size of the apparatus.

### SUMMARY

The present disclosure provides an apparatus for manufacturing a dry electrode with a minimized overall size of the apparatus while the apparatus improves the stretch rate of a free-standing film formed with the apparatus.

An apparatus for manufacturing a dry electrode may include a feeder configured to supply fine powder, a plurality of main rollers sequentially disposed in a first direction and configured to calender the fine powder supplied from the feeder into a free-standing film, and a plurality of shear rollers adjacent to the plurality of main rollers in a second direction crossing the first direction, wherein the plurality of main rollers and the plurality of shear rollers are configured such that the free-standing film is interposed between the main rollers and the shear rollers.

Each of the shear rollers may be configured to stretch the free-standing film together with one of the main rollers.

Diameters of the plurality of shear rollers are smaller than diameters of the main rollers.

Diameters of the shear rollers may sequentially increase in the first direction.

Diameters of the shear rollers may be sequentially decrease in the first direction.

A ratio of the diameter of each of the shear rollers with respect to the diameter of the plurality of main rollers is more than 0.1 to less than 1.

A linear velocity of each of the shear rollers may be greater than a linear velocity of each of the main rollers.

The linear velocity of each of the plurality of shear rollers may be sequentially greater in the first direction.

An interval between each of the plurality of main rollers and each of the plurality of shear rollers may be sequentially smaller in the first direction.

The plurality of main rollers may include a first main roller to which the fine powder is supplied, and a second main roller adjacent to the first main roller in the first direction, and the first main roller and the second main roller are configured to calender the fine powder into the free-standing film.

The plurality of shear rollers may include a first shear roller adjacent to the second main roller in the second direction, and the second main roller and the first shear roller may be configured to stretch the free-standing film.

The plurality of main rollers may further include a third main roller adjacent to the second main roller in the first direction, and the second main roller and the third main roller may be configured to stretch the free-standing film,.

The plurality of shear rollers may further include a second shear roller adjacent to the third main roller in the second direction, and the third main roller and the second shear roller may be configured to stretch the free-standing film.

The first shear roller and the second shear roller may be located on opposite sides of the apparatus in the second direction.

A diameter of the second shear roller may be greater than a diameter of the first shear roller.

A linear velocity of the second shear roller may be greater than a linear velocity of the first shear roller.

The plurality of main rollers may further include a fourth main roller adjacent to the third main roller in the first direction, and the third main roller and the fourth main roller may be configured to stretch the free-standing film.

The plurality of shear rollers may further include a third shear roller adjacent to the fourth main roller in the second direction, and the fourth main roller and the third shear roller may be configured to stretch the free-standing film.

A diameter of the third shear roller may be greater than a diameter of the second shear roller.

A linear velocity of the third shear roller may be greater than a linear velocity of the second shear roller.

According to an embodiment, an overall size of an apparatus for manufacturing a dry electrode capable is minimized and an improved stretch rate of free-standing film may be provided.

At least some of the above and other features of the invention are set out in the claims.

### BRIEF DESCRIPTION OF THE DRAWINGS

FIG. 1 is a side view showing an apparatus for manufacturing a dry electrode according to an embodiment.
FIG. 2 is a side view showing an apparatus for manufacturing a dry electrode according to another embodiment.
FIG. 3 is a side view showing an apparatus for manufacturing a dry electrode according to a still another embodiment.
FIG. 4 is a table showing experimental results of Experimental Example 1, Experimental Example 2, Experimental Example 3, and Experimental Example 4.
FIG. 5 is a side view showing an apparatus for manufacturing a dry electrode according to a still another embodiment.
FIG. 6 is a table showing experimental results of Experimental Example 5, Experimental Example 6, Experimental Example 7.

### DETAILED DESCRIPTION OF THE EMBODIMENTS

The present disclosure will be described more fully hereinafter with reference to the accompanying drawings, in which embodiments of the disclosure are shown. As those skilled in the art would realize, the described embodiments may be modified in various different ways, all without departing from the scope of the present disclosure.

In addition, unless explicitly described to the contrary, the word "comprise", and variations such as "comprises" or "comprising", will be understood to imply the inclusion of stated elements but not the exclusion of any other elements.

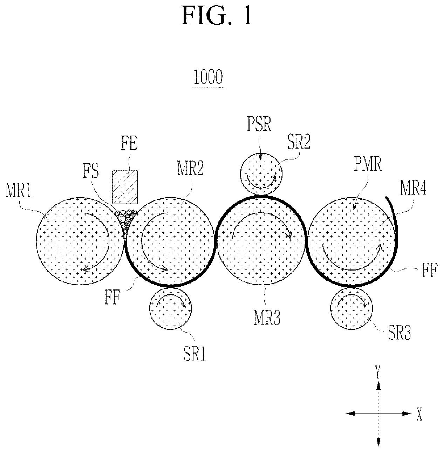

Hereinafter, an apparatus for manufacturing a dry electrode according to an embodiment will be described with reference to FIG. 1. The apparatus for manufacturing a dry electrode according to an embodiment may be an apparatus configured to manufacture a dry electrode for rechargeable batteries, but is not limited thereto, and may be an apparatus for manufacturing various dry electrodes.

FIG. 1 is a side view showing an apparatus for manufacturing a dry electrode according to an embodiment.

Referring to FIG. 1, the apparatus for manufacturing a dry electrode 1000 according to an embodiment may include a plurality of rollers configured to calender fine powder FS into a free-standing film FF. But the present disclosure is not limited to the configuration shown in FIG. 1, and may further include, for example, various rollers configured to laminate the free-standing film FF on the current collector.

The apparatus for manufacturing a dry electrode 1000 may include a feeder FE, a plurality of main rollers PMR, a plurality of shear rollers PSR. The feeder FE may supply the fine powder FS to the plurality of main rollers PMR. The fine powder FS supplied from the feeder FE to the plurality of main rollers PMR may be calendered into the free-standing film FF.

The fine powder FS may include various active materials, conductive materials, and binders, as are known in the art. For example, the fine powder FS may include a metal oxide-based material, the conductive material may include carbon black, and binder may include polytetrafluoroethylene (PTFE). The fine powder FS may be manufactured by mixing the active material, conductive material, and binder into a mixture by using various mixing means, and fibrillating the mixture into a fibrillated dry powder by using various fibrillation means, but is not limited thereto.

The feeder FE may include various storage means configured to store the fine powder FS and various discharging means configured to supply the fine powder FS to the plurality of main rollers PMR. The fine powder FS supplied from the feeder FE to the plurality of main rollers PMR may be calendered into the free-standing film FF.

The plurality of main rollers PMR may calender the fine powder FS supplied from the feeder FE into the free-standing film FF. The main rollers PMR are sequentially disposed in a first direction X, and the fine powder FS may be supplied between the plurality of main rollers PMR and calendered into the free-standing film FF. Here, the first direction X may include a horizontal direction, but is not limited thereto. A second direction Y may be a direction crossing the first direction X, and the second direction Y may include a vertical direction, but is not limited thereto.

The plurality of main rollers PMR may roll and stretch the fine powder FS and calender it into the free-standing film FF, but the present disclosure is not limited thereto.

Each of the plurality of main rollers PMR may rotate at the same linear velocity (at its surface) or they may rotate at different linear velocities. Each of the plurality of main rollers PMR may rotate with a gradually faster linear velocity in the first direction X away from the feeder FE, or they may each rotate with a gradually slower linear velocity. That is, a first main roller MR1 may rotate with a linear velocity that is faster or slower than a second main roller MR2, the second main roller MR2 may rotate with a linear velocity that is faster or slower than a third main roller MR3, and the third main roller MR3 may rotate with a linear velocity that is faster or slower than a fourth main roller MR4.

Each of the plurality of main rollers PMR may have the same diameter or one or more of the main rollers PMR may have a different diameter than other main rollers. For example, the diameters of the plurality of main rollers PMR may gradually decrease in the first direction X away from the feeder FE, i.e. the diameter of the fourth main roller MR4 may be less than the diameter of the third main roller MR3, the diameter of the third main roller MR3 may be less than the diameter of the second main roller MR2, and the diameter of the second main roller MR2 may be less than the diameter of the first main roller MR1. Alternatively, the plurality of main rollers PMR may have gradually increasing diameters in the first direction X away from the feeder, i.e., the diameter of fourth main roller MR4 may be greater than the diameter of the third main roller MR3, the diameter of the third main roller MR3 may be greater than the diameter of the second main roller MR2, and the diameter of the second main roller MR2 may be greater than the diameter of the first main roller MR1.

As another example, each of the main rollers PMR may include a surface-treatment layer such as a coating layer or a protrusions-and-depressions structure layer for improving bonding strength with respect to the free-standing film FF. One or more of the main rollers PMR may include the same surface-treatment layer or a different surface-treatment layer.

In an embodiment, the apparatus for manufacturing a dry electrode 1000 may include four main rollers PMR. But the apparatus is not limited thereto. In other embodiments, the plurality of main rollers PMR may include two, three, five, or more main rollers PMR.

The plurality of main rollers PMR may include the first main roller MR1, the second main roller MR2, the third main roller MR3 and the fourth main roller MR4. The first main roller MR1 may be adjacent to the feeder FE. The first main roller MR1 may rotate in a first direction. The first direction in which the first main roller MR1 rotates may be a clockwise direction or it may be a counterclockwise direction. The first main roller MR1 may calender the fine powder FS supplied from the feeder FE into the free-standing film FF together with the second main roller MR2.

The second main roller MR2 may be adjacent to the first main roller MR1 in the first direction X. The second main roller MR2 may rotate in a second direction that is opposite to the first direction that the first main roller MR1 rotates. The second direction in which the second main roller MR2 rotates may be the counterclockwise direction or it may be the clockwise direction. The second main roller MR2 may calender the fine powder FS supplied from the feeder FE into the free-standing film FF together with the first main roller MR1.

The third main roller MR3 may be adjacent to the second main roller MR2 in the first direction X. The third main roller MR3 may rotate in the first direction. The first direction in which the third main roller MR3 rotates maybe the clockwise direction or it may be the counterclockwise direction. The third main roller MR3 may perform stretching of the free-standing film FF together with the second main roller MR2. The third main roller MR3 may also perform stretching on the free-standing film FF together with the fourth main roller MR4.

The fourth main roller MR4 may be adjacent to the third main roller MR3 in the first direction X. The fourth main roller MR4 may rotate in the second direction. The second direction in which the fourth main roller MR4 rotates may be the counterclockwise direction or it may be the clockwise direction. The fourth main roller MR4 may perform stretching of the free-standing film FF together with the third main roller MR3.

The shear rollers PSR may be located adjacent to the plurality of main rollers PMR in the second direction Y. The second direction Y may be a direction crossing the first direction X, and the second direction Y may be a vertical direction, but is not limited thereto.

The shear rollers PSR may be adjacent to the plurality of main rollers PMR in the second direction Y crossing the first direction X with the free-standing film FF being interposed between the plurality of shear rollers and the plurality of main rollers PMR. Each of the shear rollers PSR may perform stretching of the free-standing film together with each of the plurality of main rollers PMR.

The diameter of each of the shear rollers PSR may be less than the diameter of each of the plurality of main rollers PMR. The ratio of the diameter of each of the plurality of shear rollers PSR with respect to the diameter of each of the plurality of main rollers PMR may be more than 0.1 to less than 1, but is not limited thereto.

The linear velocity (at the surface) of each of the plurality of shear rollers PSR may be greater than the linear velocity of each of the plurality of main rollers PMR.

Each of the shear rollers PSR may rotate with the same linear velocity, but the present disclosure is not limited thereto, and the plurality of shear rollers PSR may each rotate with different linear velocities.

The linear velocity of each of the plurality of shear rollers PSR may sequentially increase in the first direction X. That is, each of the shear rollers PSR may rotate with a gradually faster linear velocity in the first direction X away from the feeder FE. In other cases, the plurality of shear rollers PSR may rotate with a gradually slower linear velocity in the first direction X.

Each of the shear rollers PSR may have the same diameter, but the present disclosure is not limited thereto, and each of the plurality of shear rollers PSR may have a different diameter. For example, the diameters of the plurality of shear rollers PSR may gradually increase or decrease in the first direction X away from the feeder FE.

Each of the shear rollers PSR may include a surface-treatment layer such as a coating layer or a protrusions-and-depressions structure layer for improving bonding strength with respect to the free-standing film FF. Each of the shear rollers PSR may include the same surface-treatment layer or the shear rollers PSR may have different surface-treatment layers.

The plurality of shear rollers PSR may have the same diameter as the plurality of main rollers PMR, but the present disclosure is not limited thereto, and diameters of the shear rollers PSR may be different than the diameters of the main rollers PMR.

In an embodiment, the plurality of shear rollers PSR may include three shear rollers PSR. But the present disclosure is not limited thereto, and in another embodiment, the plurality of shear rollers PSR may include two, four, five, or more the shear rollers PSR. In addition, there may be only one shear roller.

The plurality of shear rollers PSR may include a first shear roller SR1, a second shear roller SR2 and a third shear roller SR3.

The first shear roller SR1 may be adjacent to the second main roller MR2 in the second direction Y. The first shear roller SR1 may rotate in the first direction, which is opposite to the rotating direction of the second main roller MR2. The first direction in which the first shear roller SR1 rotates may be the clockwise direction or it may be the counterclockwise direction. The first shear roller SR1 may stretch the free-standing film FF together with the second main roller MR2. The first shear roller SR1 may have a smaller diameter compared to the diameter of the second main roller MR2. The first shear roller SR1 may have a greater linear velocity compared to the linear velocity of the second main roller MR2.

For example, the first shear roller SR1 may include a plurality of sub-rollers adjacent to each other, but the present disclosure is not limited thereto.

The second shear roller SR2 may be adjacent to the third main roller MR3 in the second direction Y. The second shear roller SR2 may be located on a side opposite to the first shear roller SR1 in the second direction Y, with respect to the third main roller MR3. The second shear roller SR2 may rotate in the second direction, which is opposite to the rotating direction of the third main roller MR3. The second direction in which the second shear roller SR2 rotates may be the counterclockwise direction or the clockwise direction. The second shear roller SR2 may stretch the free-standing film FF together with the third main roller MR3. The second shear roller SR2 may have a smaller diameter compared to the diameter of the third main roller MR3. The second shear roller SR2 may have a greater linear velocity compared to the linear velocity of the third main roller MR3. The second shear roller SR2 may have the same diameter as the first shear roller SR1, but the present disclosure is not limited thereto. The second shear roller SR2 may have a greater linear velocity compared to the linear velocity of the first shear roller SR1, but the present disclosure is not limited thereto.

The second shear roller SR2 may include a plurality of sub-rollers neighboring to each other, but the present disclosure is not limited thereto.

The third shear roller SR3 may be adjacent to the fourth main roller MR4 in the second direction Y. The third shear roller SR3 may be located on a side opposite to the second shear roller SR2 in the second direction Y with respect to the fourth main roller MR4. The third shear roller SR3 may rotate in the first direction, which is opposite to the rotating direction of the fourth main roller MR4. The first direction in which the third shear roller SR3 rotates maybe the clockwise direction or it may be the counterclockwise direction. The third shear roller SR3 may stretch the free-standing film FF together with the fourth main roller MR4. The third shear roller SR3 may have a smaller diameter compared to the diameter of the fourth main roller MR4. The third shear roller SR3 may have a greater linear velocity compared to the linear velocity of the fourth main roller MR4. The third shear roller SR3 may have the same diameter as the second shear roller SR2, but the present disclosure is not limited thereto. The third shear roller SR3 may have a greater linear velocity compared to the linear velocity of the second shear roller SR2, but the present disclosure is not limited thereto.

The third shear roller SR3 may include a plurality of sub-rollers neighboring to each other, but the present disclosure not limited thereto.

In an apparatus for manufacturing a dry electrode 1000 according to an embodiment, the fine powder FS supplied from the feeder FE may be calendered to the free-standing film FF between the first main roller MR1 and the second main roller MR2. The calendered free-standing film FF may be stretched (first stretching) between the second main roller MR2 and the first shear roller SR1. It may then be stretched for a second time (second stretching) between the second main roller MR2 and the third main roller MR3, and it may be stretched for a third time (third stretching) between the third main roller MR3 and the second shear roller SR2. It may also be stretched for a fourth time (fourth stretching) between the third main roller MR3 and the fourth main roller MR4, and it may be stretched for a fifth time (fifth stretching)_between the fourth main roller MR4 and the third shear roller SR3. The free-standing film FF may also be transferred to the surfaces of the second main roller MR2, the third main roller MR3, and the fourth main roller MR4 in the apparatus for manufacturing a dry electrode 1000.

As an apparatus for manufacturing a dry electrode 1000 according to an embodiment includes the plurality of main rollers PMR disposed in the first direction X and the plurality of shear rollers PSR neighboring to the plurality of main rollers PMR and interposing the free-standing film FF with the main rollers PMR, the overall size of the apparatus may be minimized. And, at the same time, the stretch rate of the free-standing film FF may be improved. Further, in an apparatus for manufacturing a dry electrode 1000 according to an embodiment, since the diameter of each of the plurality of shear rollers PSR is smaller than the diameter of each of the plurality of main rollers PMR, the shear force applied to the free-standing film FF being stretched between each of the plurality of main rollers PMR and each of the plurality of shear rollers PSR may be improved. Accordingly, the stretch rate of the free-standing film FF may be improved. Still further, in an apparatus for manufacturing a dry electrode 1000 according to an embodiment, since the linear velocity of each of the plurality of shear rollers PSR is greater than the linear velocity of each of the plurality of main rollers PMR, the shear force applied to the free-standing film FF stretched between each of the plurality of main rollers PMR and each of the plurality of shear rollers PSR may be improved, and, thus, the stretch rate of the free-standing film FF may be improved. Thus, the apparatus for manufacturing a dry electrode 1000 not only has a minimized overall size, but it also improves the stretch rate of the free-standing film FF.

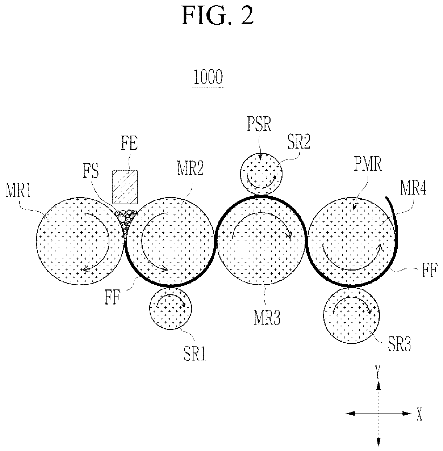

Hereinafter, an apparatus for manufacturing a dry electrode according to another embodiment will be described with reference to FIG. 2. Parts that are different from the apparatus for manufacturing a dry electrode according to the above-described embodiment will be described.

FIG. 2 is a side view showing an apparatus for manufacturing a dry electrode according to another embodiment.

Referring to FIG. 2, an apparatus for manufacturing a dry electrode 1000 according to another embodiment may include the feeder FE, the plurality of main rollers PMR and the plurality of shear rollers PSR.

The diameter of each of the plurality of shear rollers PSR sequentially increases in the first direction X. The plurality of shear rollers PSR may include the first shear roller SR1, the second shear roller SR2 and the third shear roller SR3, with the diameters of the shear rollers PSR becoming sequentially greater in the first direction X away from the feeder FE. That is, the diameter of the second shear roller SR2 may be greater than the diameter of the first shear roller SR1, and the diameter of the third shear roller SR3 may be greater than the diameter of the second shear roller SR2.

As the apparatus for manufacturing a dry electrode 1000 according to another embodiment includes the plurality of main rollers PMR disposed in the first direction X and the plurality of shear rollers PSR adjacent to the plurality of main rollers PMR and interposing the free-standing film FF with the main rollers PMR, the overall size of the apparatus may be minimized. At the same time, the stretch rate of the free-standing film FF may be improved.

In the apparatus for manufacturing a dry electrode 1000 according to another embodiment, since the diameter of each of the plurality of shear rollers PSR is less than the diameter of each of the plurality of main rollers PMR, the shear force applied to the free-standing film FF stretched between each of the plurality of main rollers PMR and each of the plurality of shear rollers PSR may be improved, and accordingly, the stretch rate of the free-standing film FF may be improved.

In the apparatus for manufacturing a dry electrode 1000 according to another embodiment, the linear velocity of each of the plurality of shear rollers PSR is greater than the linear velocity of each of the plurality of main rollers PMR. Thus, the shear force applied to the free-standing film FF stretched between each of the plurality of main rollers PMR and each of the plurality of shear rollers PSR may be improved. Thus, the stretch rate of the free-standing film FF may be improved. Also in the apparatus for manufacturing a dry electrode 1000 according to another embodiment, since the diameter of each of the plurality of shear rollers PSR sequentially increases in the first direction X, the shear force applied to the free-standing film FF stretched between each of the plurality of main rollers PMR and each of the plurality of shear rollers PSR may be improved. Accordingly, the stretch rate of the free-standing film FF may be improved. Thus, in the apparatus for manufacturing a dry electrode 1000, an overall size of the apparatus is minimized and there is an improved stretch rate of the free-standing film FF.

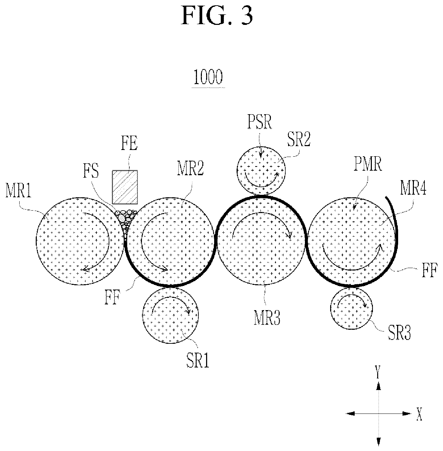

Hereinafter, an apparatus for manufacturing a dry electrode according to a still another embodiment will be described with reference to FIG. 3. Hereinafter, parts that are different from the apparatus for manufacturing a dry electrode according to the above-described embodiments will be described.

FIG. 3 is a side view showing an apparatus for manufacturing a dry electrode according to a still another embodiment.

Referring to FIG. 3, an apparatus for manufacturing a dry electrode 1000 according to a still another embodiment may include the feeder FE, the plurality of main rollers PMR and the plurality of shear rollers PSR.

The diameters of the plurality of shear rollers PSR sequentially decreases in the first direction X. More specifically, the plurality of shear rollers PSR may include the first shear roller SR1, the second shear roller SR2 and the third shear roller SR3. The diameter of the second shear roller SR2 may be less than the diameter of the first shear roller SR1, and the diameter of the third shear roller SR3 may be less than the diameter of the second shear roller SR2.

As the apparatus for manufacturing a dry electrode 1000 according to a still another embodiment includes the plurality of main rollers PMR disposed in the first direction X and the plurality of shear rollers PSR adjacent to the plurality of main rollers PMR with the free-standing film FF interposed between the rollers, the overall size of the apparatus may be minimized. At the same time, the stretch rate of the free-standing film FF may be improved.

In the apparatus for manufacturing a dry electrode 1000 according to a still another embodiment, since the diameter of each of the plurality of shear rollers PSR is less than the diameter of each of the plurality of main rollers PMR, the shear force applied to the free-standing film FF stretched between each of the plurality of main rollers PMR and each of the plurality of shear rollers PSR may be improved. Accordingly, the stretch rate of the free-standing film FF may be improved. Further, in the apparatus for manufacturing a dry electrode 1000 according to a still another embodiment, the linear velocity of each of the plurality of shear rollers PSR is greater than the linear velocity of each of the plurality of main rollers PMR, and, thus, the shear force applied to the free-standing film FF stretched between each of the plurality of main rollers PMR and each of the plurality of shear rollers PSR may be improved. Accordingly, the stretch rate of the free-standing film FF may be improved. Still further, in the apparatus for manufacturing a dry electrode 1000 according to a still another embodiment, since the diameter of each of the plurality of shear rollers PSR sequentially decreases in the first direction X, the shear force applied to the free-standing film FF stretched between each of the plurality of main rollers PMR and each of the plurality of shear rollers PSR may be improved. Accordingly, the stretch rate of the free-standing film FF may be improved. Thus, in the apparatus for manufacturing a dry electrode 1000 an overall size of the apparatus is minimized and the stretch rate of the free-standing film FF is improved.

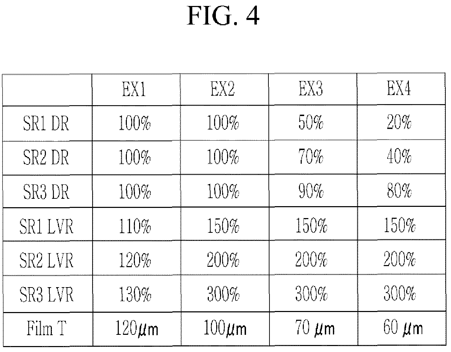

Hereinafter, referring to FIG. 4, an Experimental Example 1, an Experimental Example 2, an Experimental Example 3, and an Experimental Example 4 for confirming effects of a dry manufacturing apparatus according to the above-described embodiments, including the dry manufacturing apparatus according to another embodiment and the dry manufacturing apparatus according to a still another embodiment, will be described. The Experimental Examples 1-4 were performed using one of the above-described dry manufacturing apparatuses.

FIG. 4 is a table showing experimental results of Experimental Example 1, Experimental Example 2, Experimental Example 3, and Experimental Example 4.

In FIG. 4, SR1 DR is a diameter ratio of the first shear roller with respect to a diameter of one of the plurality of main rollers, SR2 DR is a diameter ratio of the second shear roller with respect to a diameter of one of the plurality of main rollers, SR3 DR is a diameter ratio of the third shear roller with respect to a diameter of one of the plurality of main rollers, SR1 LVR is a linear velocity ratio of the first shear roller with respect to a linear velocity of one of the plurality of main rollers, SR2 LVR is a linear velocity ratio of the second shear roller with respect to a linear velocity of one of the plurality of main rollers, SR3 LVR is a linear velocity ratio of the third shear roller with respect to a linear velocity of one of the plurality of main rollers, and Film T is the thickness of free-standing film having passed through the fourth main roller and the third shear roller.

Referring to FIG. 4, as experimental results of Experimental Example 1 EX1, Experimental Example 2 EX2, Experimental Example 3 EX3, Experimental Example 4 EX4 show, it has been confirmed that the smaller the diameter of the plurality of shear rollers compared to diameter of the plurality of main rollers and the greater the linear velocity of the plurality of shear rollers compared to the linear velocity plurality of main rollers, the thinner the thickness of free-standing film may become. Thus, an apparatus for manufacturing a dry electrode capable of improving the stretch rate may be provided.

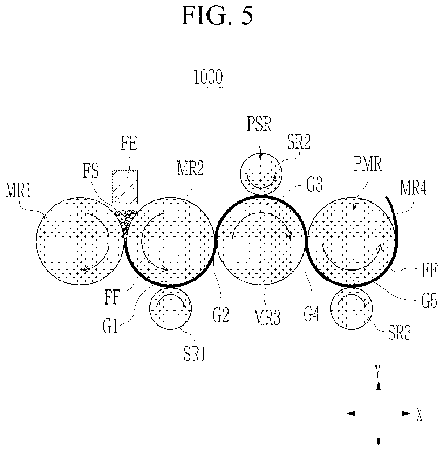

Hereinafter, an apparatus for manufacturing a dry electrode according to a still another embodiment will be described with reference to FIG. 5. Hereinafter, parts that are different from the apparatus for manufacturing a dry electrode according to the above-described embodiment will be described.

FIG. 5 is a side view showing an apparatus for manufacturing a dry electrode according to a still another embodiment.

Referring to FIG. 5, an apparatus for manufacturing a dry electrode 1000 according to a still another embodiment may include the feeder FE, the plurality of main rollers PMR, the plurality of shear rollers PSR. In this embodiment, the interval (gap or spacing) between each of the plurality of main rollers PMR and each of the plurality of shear rollers PSR sequentially decreases in the first direction X.

In an apparatus for manufacturing a dry electrode 1000 according to a still another embodiment, the fine powder FS supplied from the feeder FE may be calendered to the free-standing film FF between the first main roller MR1 and the second main roller MR2, and the calendered free-standing film FF may be stretched for a first time (first stretching) in a first interval G1 between the second main roller MR2 and the first shear roller SR1, stretched for a second time (second stretching) in a second interval G2 between the second main roller MR2 and the third main roller MR3, stretched for a third time (third stretching) in a third interval G3 between the third main roller MR3 and the second shear roller SR2, stretched for a fourth time (fourth stretching) in a fourth interval G4 between the third main roller MR3 and the fourth main roller MR4, and stretched for a fifth time (fifth stretching) in a fifth interval G5 between the fourth main roller MR4 and the third shear roller SR3. The first interval G1, the second interval G2, the third interval G3, the fourth interval G4, and the fifth interval G5, which are intervals between each of the plurality of main rollers PMR and each of the plurality of shear rollers PSR, may sequentially decrease in the first direction X away from the feeder FE.

Since the apparatus for manufacturing a dry electrode 1000 according to a still another embodiment includes the plurality of main rollers PMR disposed in the first direction X and the plurality of shear rollers PSR adjacent to the plurality of main rollers PMR with the free-standing film FF interposed between the rollers, the overall size of the apparatus may be minimized, and, at the same time, the stretch rate of the free-standing film FF may be improved. Also, in the apparatus for manufacturing a dry electrode 1000 according to a still another embodiment, since the diameter of each of the plurality of shear rollers PSR is smaller than the diameter of each of the plurality of main rollers PMR, the shear force applied to the free-standing film FF stretched between each of the plurality of main rollers PMR and each of the plurality of shear rollers PSR may be improved, and, accordingly, the stretch rate of the free-standing film FF may be improved. Further, in the apparatus for manufacturing a dry electrode 1000 according to a still another embodiment, since the linear velocity of each of the plurality of shear rollers PSR is greater than the linear velocity of each of the plurality of main rollers PMR, the shear force applied to the free-standing film FF stretched between each of the plurality of main rollers PMR and each of the plurality of shear rollers PSR may be improved, and, accordingly, the stretch rate of the free-standing film FF may be improved. Still further, in the apparatus for manufacturing a dry electrode 1000 according to a still another embodiment, the interval between each of the plurality of main rollers PMR and each of the plurality of shear rollers PSR may sequentially decrease in the first direction X, and the pressure applied to the free-standing film FF stretched between each of the plurality of main rollers PMR and each of the plurality of shear rollers PSR may be improved. The stretch rate of the free-standing film FF may thereby be improved. Thus, an overall size of the apparatus for manufacturing a dry electrode 1000 is minimized and there is also an improved stretch rate of the free-standing film FF may be provided.

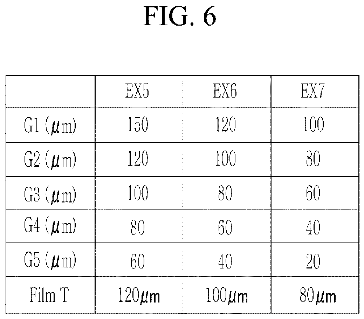

Hereinafter, referring to FIG. 6, an Experimental Example 5, an Experimental Example 6, and an Experimental Example 7 for confirming the effect of the above-described dry manufacturing apparatus according to a still another embodiment will be described. The Experimental Examples 5-7 were performed by using the dry manufacturing apparatus according to the above-described still another embodiment, as is depicted in FIG. 5.

FIG. 6 is a table showing experimental results of Experimental Examples 5-7.

In FIG. 6, G1, G2, G3, G4, and G5 are the first interval, the second interval, the third interval, the fourth interval, and the fifth interval of the above-described dry manufacturing apparatus according to a still another embodiment, respectively, and Film T is the thickness of free-standing film having passed through the fourth main roller and the third shear roller.

Referring to FIG. 6, as experimental results of Experimental Example 5 EX5, Experimental Example 6 EX6, Experimental Example 7 EX7 show that, as the interval between each of the plurality of main rollers and each of the plurality of shear rollers sequentially decreases in the first direction, the thickness of free-standing film becomes thinner. Thus, the apparatus for manufacturing a dry electrode is capable of improving the stretch rate.

Embodiments are set out in the following clauses:
Clause 1. An apparatus for manufacturing a dry electrode, comprising:
   a feeder configured to supply fine powder;
   a plurality of main rollers sequentially disposed in a first direction and configured to calender the fine powder supplied from the feeder into a free-standing film; and
   a plurality of shear rollers neighboring to a plurality of main rollers in a second direction crossing the first direction interposing the free-standing film.
Clause 2. The apparatus according to clause 1, wherein each of the plurality of shear rollers performs stretching on the free-standing film, together with each of the plurality of main rollers.
Clause 3. The apparatus according to clause 1, wherein a diameter of each of the plurality of shear rollers is smaller than a diameter of each of the plurality of main rollers.
Clause 4. The apparatus according to clause 3, wherein the diameter of each of the plurality of shear rollers is sequentially greater in the first direction.
Clause 5. The apparatus according to clause 3, wherein the diameter of each of the plurality of shear rollers is sequentially smaller in the first direction.
Clause 6. The apparatus according to clause 3, wherein a ratio of the diameter of each of the plurality of shear rollers with respect to the diameter of each of the plurality of main rollers is more than 0.1 to less than 1.
Clause 7. The apparatus according to clause 1, wherein a linear velocity of each of the plurality of shear rollers is greater than a linear velocity of each of the plurality of main rollers.
Clause 8. The apparatus according to clause 7, wherein the linear velocity of each of the plurality of shear rollers is sequentially greater in the first direction.
Clause 9. The apparatus according to clause 1, wherein an interval between each of the plurality of main rollers and each of the plurality of shear rollers is sequentially smaller in the first direction.
Clause 10. The apparatus according to clause 1, wherein the plurality of main rollers comprises:
   a first main roller to which the fine powder is supplied; and
   a second main roller neighboring to the first main roller in the first direction, and configured to calender the fine powder into the free-standing film, together with the first main roller.
Clause 11. The apparatus according to clause 10, wherein a plurality of shear rollers comprises a first shear roller neighboring to the second main roller in the second direction, and configured to perform first stretching on the free-standing film, together with the second main roller.
Clause 12. The apparatus according to clause 11, wherein the plurality of main rollers further comprises a third main roller neighboring to the second main roller in the first direction, and configured to perform second stretching on the free-standing film, together with the second main roller.
Clause 13. The apparatus according to clause 12, wherein the plurality of shear rollers further comprise a second shear roller neighboring to the third main roller in the second direction, and configured to perform third stretching on the free-standing film, together with the third main roller.
Clause 14. The apparatus according to clause 13, wherein the second shear roller is located on an opposite side to the first shear roller in the second direction.
Clause 15. The apparatus according to clause 13, wherein a diameter of the second shear roller is greater than a diameter of the first shear roller.
Clause 16. The apparatus according to clause 13, wherein a linear velocity of the second shear roller is greater than a linear velocity of the first shear roller.
Clause 17. The apparatus according to clause 13, wherein the plurality of main rollers further comprise a fourth main roller neighboring to the third main roller in the first direction, and configured to perform fourth stretching on the free-standing film, together with the third main roller.
Clause 18. The apparatus according to clause 17, wherein the plurality of shear rollers further comprises a third shear roller neighboring to the fourth main roller in the second direction, and configured to perform fifth stretching on the free-standing film, together with the third main roller.
Clause 19. The apparatus according to clause 18, wherein a diameter of the third shear roller is greater than a diameter of the second shear roller.
Clause 20. The apparatus according to clause 18, wherein a linear velocity of the third shear roller is greater than a linear velocity of the second shear roller.

While this disclosure has been described in connection with what is presently considered to be practical embodiments, it is to be understood that the disclosure is not limited to the disclosed embodiments. On the contrary, the disclosure covers various modifications and equivalent arrangements.

### <Description of symbols>

FE: feeder
PMR: main roller
PSR: shear roller

## Claims

**1.** An apparatus for manufacturing a dry electrode, the apparatus comprising:
a feeder configured to supply fine powder;
a plurality of main rollers sequentially disposed in a first direction and configured to calender the fine powder supplied from the feeder into a free-standing film; and
a plurality of shear rollers adjacent to the plurality of main rollers in a second direction crossing the first direction,
wherein the plurality of main rollers and plurality of shear rollers are configured such that the free-standing film is interposed between the main rollers and the shear rollers.

**2.** The apparatus as claimed in claim 1, wherein each of the shear rollers is configured to stretch the free-standing film together with one of the main rollers.

**3.** The apparatus as claimed in claim 1 or claim 2, wherein diameters of of the shear rollers are smaller than diameters of the main rollers, and optionally wherein the diameters of the shear rollers sequentially increase in the first direction, or wherein the diameters of the plurality of shear rollers sequentially decrease in the first direction.

**4.** The apparatus as claimed in claim 3, wherein a ratio of the diameter of each of the shear rollers with respect to the diameter of each of the main rollers is more than 0.1 to less than 1.

**4.** The apparatus as claimed in any one of the preceding claims, wherein the shear rollers are configured to have linear velocities that are greater than linear velocities of the main rollers, and optionally wherein the linear velocity of each of the plurality of shear rollers is sequentially greater in the first direction.

**5.** The apparatus as claimed in any one of the preceding claims, wherein an interval between each of the plurality of main rollers and each of the plurality of shear rollers is sequentially smaller in the first direction.

**6.** The apparatus as claimed in any one of the preceding claims, wherein the plurality of main rollers comprises:
a first main roller to which the fine powder is supplied; and
a second main roller adjacent to the first main roller in the first direction, and
wherein the first main roller and the second main roller are configured to calender the fine powder into the free-standing film.

**7.** The apparatus as claimed in claim 6, wherein the plurality of shear rollers comprises a first shear roller adjacent to the second main roller in the second direction, and
wherein the second main roller and the first shear roller are configured to stretch the free-standing film.

**8.** The apparatus as claimed in claim 7, wherein the plurality of main rollers further comprises a third main roller adjacent to the second main roller in the first direction, and
wherein the second main roller and the third main roller are configured to stretch the free-standing film.

**9.** The apparatus as claimed in claim 8, wherein the plurality of shear rollers further comprise a second shear roller adjacent to the third main roller in the second direction, and
wherein the third main roller and the second shear roller are configured to stretch the free-standing film.

**10.** The apparatus as claimed in claim 9, wherein the first shear roller and the second shear roller are located on opposite sides of the apparatus in the second direction.

**11.** The apparatus as claimed in claim 9 or claim 10, wherein a diameter of the second shear roller is greater than a diameter of the first shear roller.

**12.** The apparatus as claimed in claim 9, claim 10 or claim 11, wherein the second shear roller is configured to rotate at a linear velocity that is greater than a linear velocity of the first shear roller.

**13.** The apparatus as claimed in any one of claims 9 to 12, wherein the plurality of main rollers further comprise a fourth main roller adjacent to the third main roller in the first direction, and
wherein the third main roller and the fourth main roller are configured to stretch the free-standing film.

**14.** The apparatus as claimed in claim 13, wherein the plurality of shear rollers further comprises a third shear roller adjacent to the fourth main roller in the second direction, and
wherein fourth main roller and the third shear roller are configured to stretch the free-standing film, and optionally wherein a diameter of the third shear roller is greater than a diameter of the second shear roller, and/or the third shear roller is configured to rotate at a linear velocity that is greater than a linear velocity of the second shear roller.
